# DEMANDE DE BREVET EUROPEEN

(11) **EP 0 976 438 A1**
(43) Date de publication de la demande: **02.02.2000**
(21) Numéro de dépôt: 99401904.0
(22) Date de dépôt: 26.07.1999
(51) Int. Cl.: B01D 46/42, B01D 46/24

(54) **Procédé de changement d'une cartouche filtrante montée dans un conduit d'écoulement d'un fluide et agencement pour la mise en oeuvre du procédé**

(30) Priorité: 27.07.1998 FR 9809569
(71) Demandeur: SOCIETE D'ETUDES ET DE CONSTRUCTIONS AERO-NAVALES, F-92230 Gennevilliers (FR)
(72) Inventeur: Mery, Xavier, 92220 Bagneux (FR); Chevallier, Claude, 78260 Achères (FR)
(74) Mandataire: Coester, Jacques Charles

(57) **Abrégé**

L'invention concerne un procédé de changement d'une cartouche filtrante montée dans un conduit d'écoulement d'un fluide et susceptible d'être retirée du conduit, à travers une ouverture dans la paroi de celui-ci.

Le procédé est caractérisé en ce que l'on amène la cartouche (6) à s'engager lors de son mouvement de retrait du conduit (1) dans une poche (14) seulement ouverte au niveau de ladite ouverture (8).

L'invention est utilisable dans le domaine des filtres montés dans des voies d'écoulement d'un fluide.

## Description

L'invention concerne un procédé de changement d'une cartouche filtrante montée dans un conduit d'écoulement d'un fluide et susceptible d'être retirée du conduit, à travers une ouverture dans la paroi de celui-ci, et un agencement de cartouche filtrante pour la mise en oeuvre de ce procédé.

Les procédés et agencements de ce type, qui sont connus, présentent les inconvénients que le processus de remplacement est tellement long que soit l'installation d'un filtre auxiliaire transitoire est obligatoire soit que la circulation de l'air doit être stoppée et qu'il s'accompagne d'une pollution de l'environnement par les matières retenues dans le filtre.

La présente invention a pour but de proposer un procédé et un agencement de cartouche filtrante qui pallie ces inconvénients.

Pour atteindre ce but, le procédé selon l'invention est caractérisé en ce que l'on amène la cartouche à s'engager lors de son mouvement de retrait du conduit dans une poche fermée et seulement ouverte au niveau de ladite ouverture.

L'agencement de cartouche filtrante pour la mise en oeuvre de ce procédé est caractérisé en ce qu'il comporte un capot adapté pour être fixé sur le pourtour de l'ouverture de mise en place et de retrait de la cartouche filtrante et comprenant deux parties amoviblement assemblables, une première partie principale supérieure creuse solidaire de la cartouche filtrante et logeant une poche à l'état replié et solidaire du fond de cette partie de capot et une deuxième partie de capot à laquelle est fixée l'autre extrémité, ouverte, de la poche et qui est montée amoviblement sur le pourtour de l'ouverture, la longueur de la poche étant au moins légèrement supérieure à la dimension de la cartouche dans la direction du mouvement de retrait de la cartouche.

Selon une caractéristique de l'invention, l'agencement comporte un dispositif de volet de fermeture de l'ouverture du conduit, après le retrait de la cartouche.

Selon encore une autre caractéristique de l'invention, la partie de la cartouche, qui est opposée à celle solidarisée du capot, comporte des moyens de fermeture de la poche, après engagement de la cartouche dans celle-ci.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemples illustrant un mode de réalisation de l'invention et sur lesquels :
- la figure 1 est une vue en coupe axiale d'un conduit d'écoulement d'un fluide, équipé d'un agencement de cartouche filtrante selon la présente invention ;
- la figure 2 est une vue de dessus du conduit et de l'agencement selon la figure 1;
- les figures 3A et 3B sont des vues similaires à la figure 1 mais montrent l'agencement respectivement au moment du retrait de la cartouche filtrante et juste après ce retrait ;
- les figures 4A à 4D illustrent le procédé selon l'invention en représentant quatre étapes du retrait de la cartouche filtrante ;
- la fig. 5 est une vue schématique d'une autre version de réalisation de l'agencement selon l'invention.

Sur les figures, les numéros de référence 1 et 2 désignent respectivement un conduit d'écoulement d'un fluide et un agencement de cartouche filtrante selon l'invention, destiné à être monté amoviblement dans le conduit. Le conduit 1 est encore pourvu des moyens indiqués en 3 qui permettent la mise en place, le cas échéant, d'un filtre auxiliaire, pendant le remplacement d'une cartouche (6). Il est à noter que l'utilisation d'un tel filtre auxiliaire, obligatoire selon l'état de la technique, est seulement facultative dans le cas de l'invention, en raison de la courte durée de temps nécessaire pour le remplacement d'une cartouche de filtre par une nouvelle cartouche.

L'agencement de cartouche filtrante selon l'invention comporte un capot 5 auquel est fixée la cartouche filtrante 6 et qui est monté amoviblement sur le pourtour 7 de l'ouverture 8 pratiquée dans le conduit 1 pour la mise en place et le retrait de la cartouche 6. Le capot 5 comporte une partie de capot principale 10, qui est creuse et pourvue d'une bride extérieure 11 entourant son extrémité ouverte et une deuxième partie 12 également en forme d'une bride à laquelle la bride 11 peut être amoviblement fixée par exemple à l'aide de vis et qui comporte les moyens permettant son montage amovible sur le pourtour 7 de l'ouverture 8 avantageusement également à l'aide de vis.

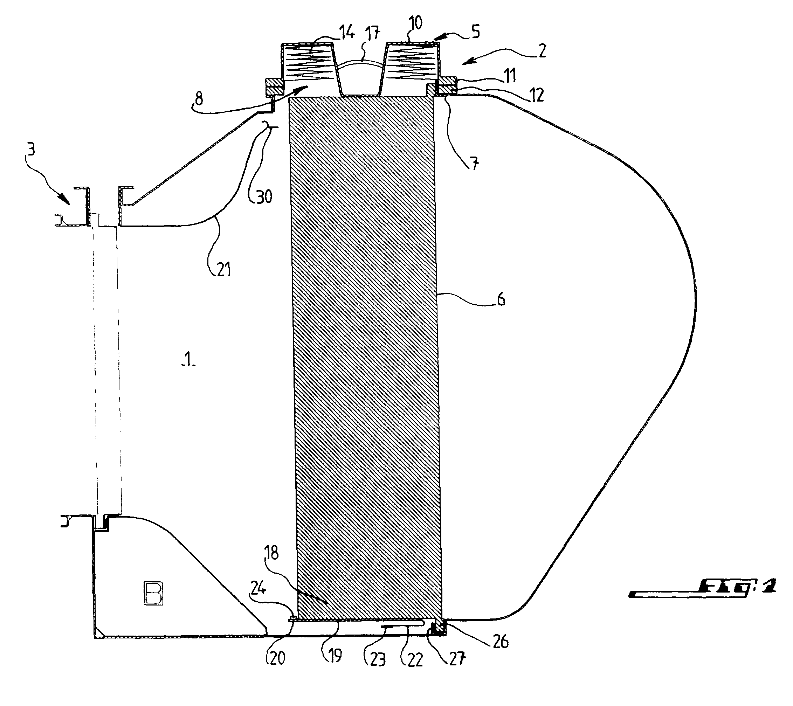

Comme on le voit notamment sur la figure 1, une poche 14 est logée, à l'état replié en forme d'accordéon dans le fond du capot 5, plus précisément dans la partie creuse principale 10 de celui-ci, autour de l'extrémité de la cartouche. Cette poche est fixée par son extrémité fermée au fond du capot et, par le pourtour de son extrémité ouverte à la partie 12 de fixation amovible à la bordure 7 du conduit 1, comme on le voit notamment sur les figures 3A et 38. On constate encore que le capot est pourvu d'un organe tel qu'une poignée indiquée schématiquement en 17 pour faciliter l'enlèvement du capot et le retrait de la cartouche filtrante 6.

L'extrémité arrière 18 de la cartouche filtrante est pourvue de moyens de fermeture étanche de la poche au moment où la cartouche sort du conduit 1. Ces moyens comportent un élément en forme d'une plaque 19 à l'extrémité de la cartouche, qui fait latéralement saillie sur un côté pour former une patte 20 d'actionnement d'un volet 21 de fermeture de l'ouverture 8 après le retrait de la cartouche 6 et qui comprend, sur son côté opposé, une languette souple 22 ayant une longueur suffisante pour permettre la fermeture de la poche 14 après le retrait de la cartouche et le démontage de la bride 12 du conduit 1, par sa fixation sur la bride 12, comme le montre la figure 38. La fixation peut être réalisée de toute manière appropriée, par exemple à l'aide d'une bande Velcro 23 prévue à l'extrémité de la languette 22. La patte en saillie 20 porte également sur sa surface supérieure des moyens 24 permettant sa fixation sous la bride 12. L'élément 24 pourrait également être formé par une bande Velcro.

Concernant la cartouche filtrante 6, on constate que son extrémité arrière 18 est pourvue d'un ergot 26 pour assurer le positionnement correct de la cartouche par engagement de l'ergot dans une rainure de forme complémentaire 27 prévue sur le fond du conduit 1.

Il est encore à noter que le volet 21 de fermeture de l'ouverture 8 occupe, lorsqu'une cartouche filtrante 6 est en place dans le conduit 1 une position rabattue en arrière à l'encontre de moyens de rappel (non représentés) comme on le voit sur la figure 1. Le volet 21 est bloqué dans cette position jusqu'à ce que, lors du retrait de la cartouche, la patte d'actionnement 20 déclenche le pivotement du volet 21, par exemple en butant contre un élément de déclenchement indiqué en 30 et solidaire du volet.

En se référant aux figures 4A à 4D, on décrira ci-après brièvement les différentes étapes du processus de retrait d'une cartouche filtrante 6 du conduit 1.

La figure 4A montre la cartouche dans sa position de fonctionnement à l'intérieur du conduit 1. Comme sur la figure 1, la partie creuse principale 10 du capot 5 est fixée par sa bride 11 sur la bride 12 du capot qui est fixée, de son côté, sur la bordure 7 de l'ouverture 8 du conduit. Pour le retrait de la cartouche, on désolidarise la bride 11 de la bride 12, ce qui permet d'enlever la partie de couvercle 10. Cet enlèvement entraîne le retrait de la cartouche 6 du conduit et le déploiement de la poche qui, en restant au niveau de son extrémité ouverte solidaire de la bride 12, entoure hermétiquement la cartouche. La figure 48 illustre cette étape. Le volet 21 occupe toujours sa position rabattue mais son pivotement de fermeture est sur le point d'être déclenché. La figure 4C montre l'agencement selon l'invention juste après le pivotement du volet qui s'applique alors sous l'effet de ses moyens de rappel, contre l'extrémité arrière 18 de la cartouche filtrante. Sur la figure 4D l'opération de retrait de la cartouche est terminée et l'ensemble formé par le capot 5 et la cartouche 6 enfermée dans la poche déployée 14 est séparé du conduit 1 après désolidarisation de la bride de capot 12 de la bordure 7 de l'ouverture du conduit. Le volet 21 obture alors celle-ci.

L'opération de mise en place d'une nouvelle cartouche filtrant s'effectue de la façon inverse à l'opération du retrait. Cette opération n'est pas représentée, mais on comprend aisément qu'il suffit d'introduire la nouvelle cartouche 6 à travers l'ouverture 8, avec la poche 14 repliée dans le capot 5. L'introduction de la cartouche provoque le pivotement du volet 21 dans sa position rabattue. Après l'introduction, il reste seulement à fixer la bride 12 du capot 5 sur la bordure d'ouverture 7 du conduit 1, pour que l'agencement selon l'invention retrouve la position de fonctionnement représentée sur la figure 1.

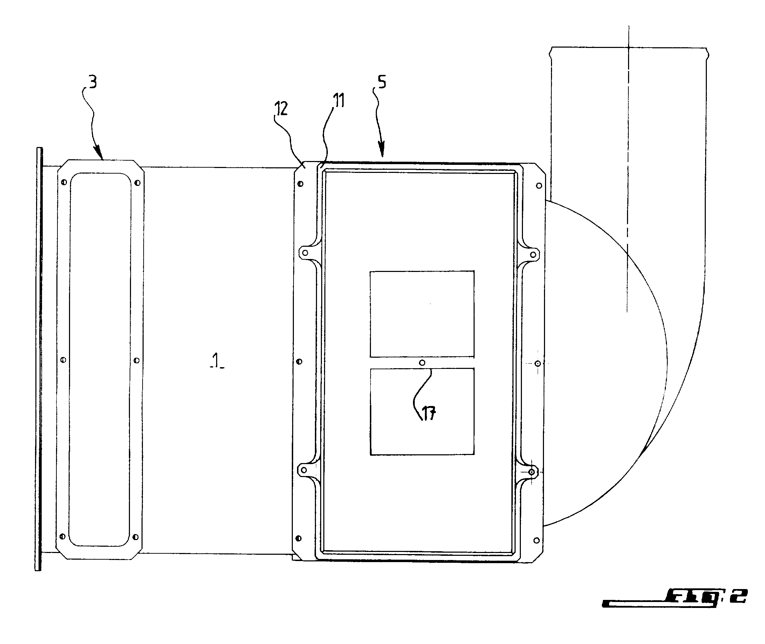

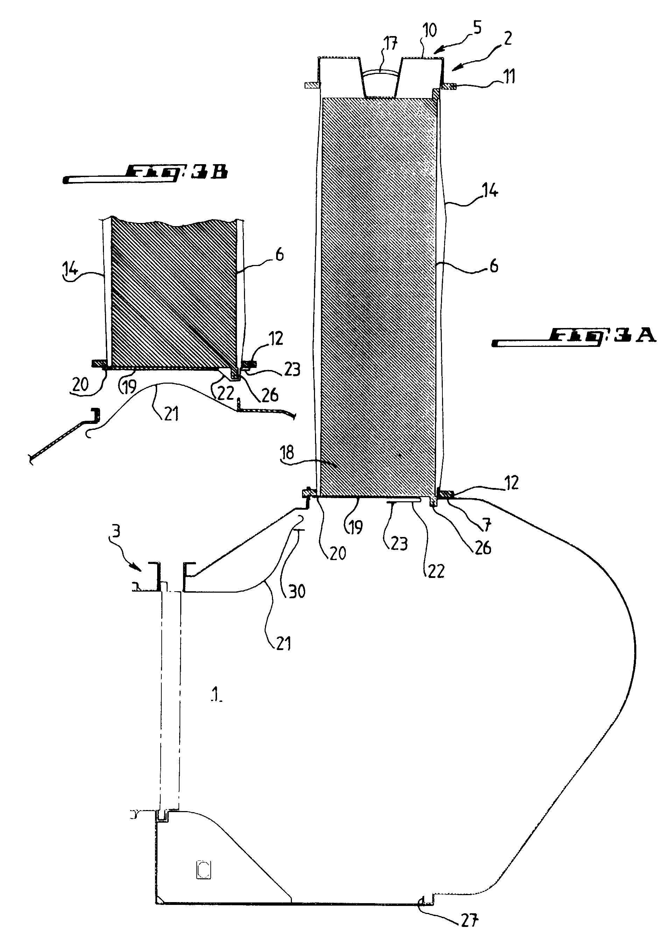

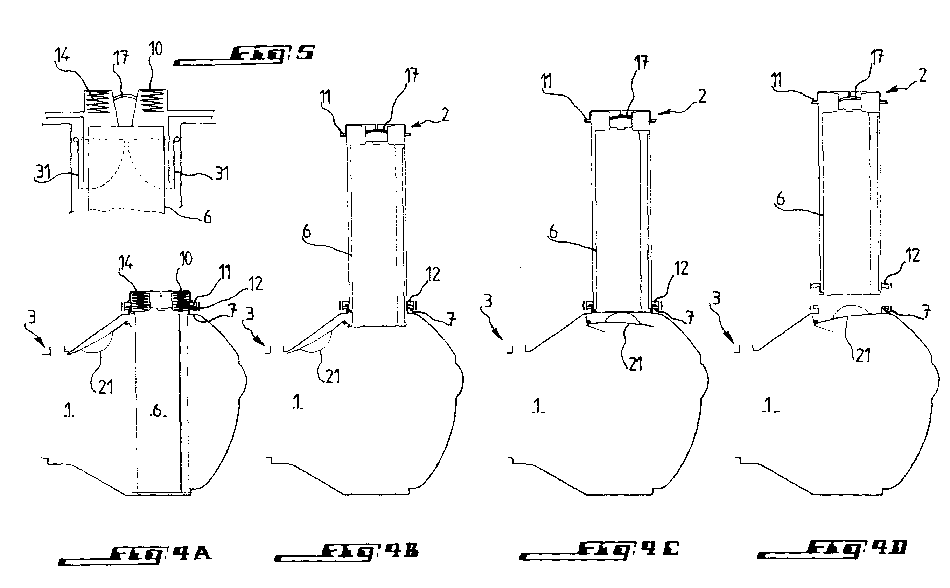

La figure 5 montre à titre d'exemple une version de réalisation du volet 21, différente de celle montrée par les figures 1 à 4. Dans ce cas, le dispositif de volet comporte deux éléments de volet 31 situés sur les côtés opposé de l'ouverture et chacun recouvrant une moitié de celle-ci. L'actionnement des volets est commandé par la cartouche 6, les volets étant appliqués contre les faces latérales de la cartouche.

## Revendications

1. Agencement de changement d'une cartouche filtrante montée dans un conduit d'écoulement d'un fluide et susceptible d'être retirée du conduit, à travers une ouverture dans la paroi de celui-ci, du type comprenant un capot de fermeture de l'ouverture et une poche dans laquelle s'engage la cartouche lors de son mouvement de retrait du conduit, dont l'extrémité ouverte est fixée amoviblement au pourtour de l'ouverture et qui est repliée lorsque la cartouche est mise en place dans le conduit et déployable lors du retrait de la cartouche, la longueur de la poche (14) étant au moins légèrement supérieure à la dimension de la cartouche dans la direction du mouvement de retrait de celle-ci, caractérisé en ce que le capot (5) comporte deux parties (10, 12) amoviblement assemblables, une première partie principale supérieure creuse (10) solidaire de la cartouche filtrante (6) et logeant ladite poche (14) à l'état replié solidaire du fond de cette partie de capot (10) et une deuxième partie de capot (12) à laquelle est fixée l'autre extrémité, ouverte, de la poche (14) et qui est montée amoviblement sur le pourtour (7) de l'ouverture (8).

2. Agencement selon la revendication 1, caractérisé en ce que la partie principale creuse (10) du capot (5) comporte autour de son extrémité ouverte une bride (11), que la deuxième partie de capot (12) est aussi formée par une bride, que la bride (11) peut être fixée amoviblement sur la bride (12) et que cette dernière est susceptible d'être montée amoviblement sur le pourtour (7) de l'ouverture (8) du conduit (1).

3. Agencement selon l'une des revendications 1 ou 2, caractérisé en ce qu'il comporte un dispositif de volet (21) de fermeture de l'ouverture (8) du conduit (1), après le retrait de la cartouche filtrante (6).

4. Agencement selon l'une des revendications 1 à 3, caractérisé en ce que la fermeture du volet (21) est actionnable, automatiquement, lors du retrait de la cartouche filtrante (6).

5. Agencement selon l'une des revendications 1 à 4, caractérisé en ce que la partie (18) de la cartouche filtrante (6), qui est opposée à celle solidarisée du capot (5), comporte des moyens (23) de fermeture de la poche (14), après l'engagement de la cartouche dans celle-ci.

6. Agencement selon l'une des revendications 1 à 5, caractérisé en ce que la partie creuse principale (10) du capot (5) comporte des moyens de préhension (17), tels qu'une poignée, permettant son enlèvement du conduit (7), après sa désolidarisation de la deuxième partie de capot (12) restée encore fixée sur la bordure (7) de l'ouverture (8) du conduit.

7. Agencement selon l'une des revendications 1 à 6, caractérisé en ce que la poche (14) est adaptée pour se déplier lors du mouvement de retrait de la cartouche filtrante (6).

8. Agencement selon la revendication 7, caractérisé en ce que la poche (14) est repliée en accordéon dans la partie creuse principale (10) du capot (5) et se déploie lors du mouvement de retrait de la cartouche.
